# EUROPEAN PATENT APPLICATION

(11) **EP 4 823 035 A1**
(43) Date of publication of application: **14.10.2026**
(21) Application number: 26171185.7
(22) Date of filing: 08.04.2026
(51) Int. Cl.: H04L 9/08, H04L 9/00

(54) **A COMPUTER IMPLEMENTED METHOD FOR INTERFACING WITH BLOCKCHAIN NETWORK**

(30) Priority: 08.04.2025 IT 202500007626
(71) Applicant: Lin Marcos Yi Fun, 00151 Roma (IT)
(72) Inventor: LIN, Marcos Yi Fun, 00151 Roma (IT)
(74) Representative: Braidotti, Andrea

(57) **Abstract**

A computer-implemented method for interfacing with a blockchain network comprising:
- receiving a unique identifier,
- determining a cryptographic key, preferably a private key, by calculation and by using said unique identifier and/or by starting from said unique identifier,
- using the cryptographic key, preferably the private key, so determined.

## Description

### TECHNICAL FIELD

The present invention relates to a computer implemented method for interfacing with blockchain network.

### STATE OF THE ART

Cryptocurrency networks function as decentralized peer-to-peer payment systems composed of multiple interconnected nodes. Exchange platforms facilitate the conversion between fiat currency and cryptocurrency. Payments are executed by broadcasting digitally signed messages to the network, allowing users to send and receive digital assets through mobile applications, client software, or web-based interfaces.

Cryptocurrency transactions do not directly identify the sender or recipient by name or wallet. Instead, ownership of digital assets is transferred to a new identifier, commonly referred to as a cryptocurrency address. This address is derived from the public component of a cryptographic key pair, while the private component remains confidential. To transfer cryptocurrency to a given address, a user generates a digitally signed transaction using the corresponding private key and broadcasts it to the network.

Host computer systems at various network nodes may provide digital wallets that allow users to manage cryptocurrency holdings and perform transactions.

Cryptocurrency transactions rely on asymmetric cryptographic mechanisms. A private key is used to generate a digital signature that authorizes a transaction, while the corresponding public key enables verification of the signature. However, existing systems for managing cryptocurrency transactions present significant limitations. Managing private keys is complex and error-prone, requiring users to securely store critical credentials, such as private keys or recovery phrases derived from random sequences of words. If a private key is lost or stolen, access to the associated cryptocurrency holdings is permanently lost, posing a substantial risk to users.

A wallet typically stores the public key associated with a cryptocurrency address and its corresponding private key.

The transfer of cryptocurrency can be cumbersome if the entire public key of an address must be manually copied and transmitted. Additionally, transactions between wallets - whether on the same or different host systems - are subject to network-wide verification through blockchain consensus mechanisms. This verification process may take significant time to complete, introducing delays in transaction finalization.

Moreover, the technical and manual steps involved in creating and managing wallets present barriers to adoption, particularly for non-technical users. Security concerns further hinder user confidence in cryptocurrency systems. Unauthorized access to wallets may occur if private keys or account credentials - such as usernames and passwords - are compromised. Furthermore, transaction processing times can be unpredictable due to network congestion, and transaction fees may fluctuate significantly, leading to inefficiencies and potential financial losses for users and merchants alike.

The challenges outlined above are not limited only to the cryptocurrency network but are inherent to most blockchain-based digital asset systems. Various blockchain networks, including those used for decentralized finance (DeFi), non-fungible tokens (NFTs), and enterprise applications, also rely on cryptographic key pairs for ownership and transaction validation. As a result, users across different blockchain ecosystems face similar difficulties in managing private keys, preventing unauthorized access, and mitigating the risks of key loss.

Additionally, many blockchain networks experience scalability issues, leading to high transaction fees and prolonged confirmation times, particularly during periods of network congestion. Smart contract-based transactions introduce further complexity, requiring users to interact with contract addresses, manage gas fees, and ensure compatibility with specific blockchain protocols.

### OBJECTS OF THE INVENTION

An object of the present invention is to propose a computer implemented method for interfacing with a blockchain network, preferably for interacting with blockchain-based entities, which overcomes, at least in part, the aforementioned drawbacks present in currently known solutions.

Another object of the present invention is to simplify the recording of data structures into a blockchain network.

Another object of the present invention is to simplify the access to the data structures, that are relevant for a given entity, as recorded in a blockchain network.

Another object of the present invention is to enable interaction with a blockchain network without requiring a prior registration, onboarding, or account creation step.

Another object of the invention is to simplify the interaction with a blockchain network.

Another object of the invention is to speed-up the interaction with a blockchain network.

Another object of the invention is to provide an interaction with a blockchain network that is implemented simply, quickly and with low costs.

Another object of the invention is to provide an interaction with a blockchain network which reduces the required operations.

Another object of the invention is to provide an interaction with a blockchain network which is highly automated.

Another object of the invention is to provide an interaction with a blockchain network which is improved and/or alternative in respect to the traditional ones.

Another object of the invention is to provide an interaction with a blockchain network having an alternative characterization, both in functional and implementation terms, with respect to the traditional ones.

Another object of the invention is to provide an interaction with a blockchain network which allows to reduce the processing time, and/or the memory usage and/or the computational complexity.

Another object of the invention is to provide an interaction with a blockchain network which allows for a lower consumption of resources by the hardware devices involved and a lower use of the bandwidth occupied by the network.

Another object of the invention is to provide a more secure interaction with a blockchain network.

### SUMMARY OF THE INVENTION

One or more of these objects - both considered individually and, in any combination, thereof - and others which will result from the following description are achieved at least in part, according to the invention, with a computer-implemented method having the features indicated in claim 1.

The present invention concerns a computer implemented method for interfacing with a blockchain network comprising:
- receiving a unique identifier,
- determining a cryptographic key, preferably a private key, by calculation and by using unique identifier and/or by starting from said unique identifier,
- using the cryptographic key, preferably the private key, so determined.

Preferably, the method further comprises using the cryptographic key, preferably the private key, so determined for signing (i.e. for generating a digital signature on) a data structure to be sent to the blockchain network.

Preferably, the method further comprises sending of the signed data structure to the blockchain network.

The present invention concerns a computer implemented method for interfacing with a blockchain network comprising:
- receiving a unique identifier,
- determining a private key by calculation and by using said unique identifier and/or by starting from said unique identifier,
- deriving a public key from said private key so determined,
- preparing a data structure to be sent to the blockchain network, wherein said data structure comprises a field that contains the public key so derived and/or an address derived from said public key.

In particular, the method comprises:
- receiving from a sender/issuer entity F1 a unique identifier U1_ID of an entity U1 and also a digital item D_It (such as a digital document, digital money, etc.), or its reference, to be recorded on a blockchain network,
- determining a private key U1_CK for said unique identifier U1_ID by calculation and by using said unique identifier U1_ID and/or by starting from said unique identifier U1_ID,
- deriving a public key U1_PK for U1_ID from said private key U1_CK for said unique identifier U1_ID,
- preparing a data structure T comprising the digital item D_It and a field that contains the public key U1_PK for said unique identifier U1_ID so derived and/or an address U1_PA derived from said public key U1_PK for said unique identifier U1_ID.

Preferably, the method further comprises signing of the data structure so prepared by using a further private key. In particular, said further private key being distinct from the cryptographic key determined from the unique identifier U1_ID.

Preferably, the method further comprises signing of the data structure so prepared by using a further private key that is the private key of, or associate to, the sender/issuer entity F1.

Preferably, said further private key of, or associate to, the sender/issuer entity F1 may be calculated by using a unique identifier F1_ID of the sender/issuer entity F1 and/or by starting from the unique identifier F1_ID of the sender/issuer entity F1.

Preferably, said further private key of, or associate to, the sender/issuer entity F1 may be previously generated at or following to an onboarding step of the sender/issuer entity F1.

Preferably, the method further comprises sending of the data structure so signed to the blockchain network for the recording.

Preferably, the method is configured for allowing an entity to interface with a blockchain network by using its unique contact identifier.

Preferably, the method allows to define an interface, more preferably a wallet interface, between an entity and the blockchain network.

The present invention concerns a computer implemented method for interfacing with a blockchain network, wherein a sender/issuer entity F1 knowing the unique identifier U1_ID of an entity U1 requests the creation of a data structure to be recorded in a blockchain, wherein said data structure is intended to:
- contain a public key for U1_ID or an address for U1_ID that is derived from said public key, wherein the public key for U1_ID is derived from a private key U1_CK for U1_ID that is calculated by starting and/or using the unique identifier U1_ID,
- be signed by the private key of the sender/issuer entity F1.

The present invention concerns a computer implemented method for interfacing with a blockchain network comprising:
- receiving a unique identifier,
- determining a private key by calculation and by using unique identifier and/or by starting from said unique identifier,
- deriving a public key from said private key so determined,
- sending and/or using the public key so derived and/or an address, derived from said public key, for querying the blockchain network to retrieve at least one data structure that is recorded in said blockchain network and that contains, or is associated with, said public key or said address.

In particular, the method comprises:
- receiving from an entity U1 a unique identifier U1_ID of said entity U1,
- determining a private key U1_CK for said unique identifier U1_ID by calculation and by using said unique identifier U1_ID and/or by starting from said unique identifier U1_ID,
- deriving a public key U1_PK for said unique identifier U1_ID from said private key U1_CK for said unique identifier U1_ID,
- sending and/or using the public key U1_PK so derived and/or an address U1_PA, derived from said public key U1_PK, for querying the blockchain network so as to retrieve at least one data structure which is recorded in said blockchain network and which contains said public key U1_PK or said address U1_PA.

Preferably, the method further comprises receiving data of said at least one data structure so retrieved.

Preferably, the method further comprises sending the received data of said at least one data structure so retrieved.

The present invention concerns a computer implemented method for interfacing with a blockchain network comprising:
- receiving a unique identifier,
- determining a private key by calculation and by using unique identifier and/or by starting from said unique identifier,
- deriving a public key from said private key so determined,
- preparing a data structure to be sent to the blockchain network, wherein said data structure comprises a field that contains the public key so derived and/or an address derived from said public key,
- preparing a message to be sent to a recipient address that is defined by, or associated with, the received unique identifier.

In particular, the method comprises:
- receiving from a sender/issuer entity F1 a unique identifier U1_ID of an entity U1 and also a digital item D_It (such as a digital document, digital money, etc.), or its reference, to be recorded on a blockchain network,
- determining a private key U1_CK for said unique identifier U1_ID by calculation and by using said unique identifier U1_ID and/or by starting from said unique identifier U1_ID,
- deriving a public key U1_PK for U1_ID from said private key U1_CK for said unique identifier U1_ID,
- preparing a data structure T comprising the digital item D_It and a field that contains the public key U1_PK for said unique identifier U1_ID so derived and/or an address U1_PA derived from said public key U1_PK for said unique identifier U1_ID,
- preparing a message M to be sent to a recipient address that is defined by, or associated with, the received unique identifier U1_ID.

Preferably, the message M is prepared after the sending of the data structure T to the blockchain network.

Preferably, the method comprises sending of the message M so prepared. Preferably, the message M is sent after the sending of the data structure T to the blockchain network.

Preferably, the message M contains a notification for the entity U1 that a data structure T associated with the entity U1 has been sent to and/or recorded on the blockchain network.

Preferably, the message M to be sent contains a verification mechanism configured to verify the identity of entity U1 and/or to authorize an action.

The present invention concerns a computer implemented method for interfacing with a blockchain network comprising:
- receiving a unique identifier, preferably a unique identifier that is verifiable,
- determining a cryptographic key, preferably a private key, by calculation and by using unique identifier and/or by starting from said unique identifier,
- using the cryptographic key, preferably the private key, so determined,
and wherein said method further comprises verifying whether the received unique identifier is associated with a given entity.

Preferably, only if said verification is successful, the received and verified unique identifier is used to determine the cryptographic key.

Preferably, for verifying whether the received unique identifier is associated with a given entity, the method comprises:
- retrieving data from at least one data source,
- determining, based on the retrieved data, whether the unique identifier is associated with the given entity,
- generating a verification result indicating whether the unique identifier is associated with the given entity.

Conveniently, said at least one data source may comprise an internal database and/or an external database and/or an external third-party database and/or a distributed ledger or blockchain network.

Preferably, determining whether the unique identifier is associated with the given entity may comprise evaluating multiple authentication factors.

Conveniently, for example, the entity to be verified may comprise:
- an individual user;
- a service subscriber;
- a telecom provider;
- an account holder/owner (for a person, business or organization);
- an online account (including for example social media, banking, cloud-based, or e-commerce accounts);
- a company or organization, including for example registered businesses, government agencies, and non-profit entities;
- a device, including for example a smartphone, tablet, personal computer, loT device, sensor, or networked appliance;
- a vehicle, including for example an automobile, aircraft, maritime vessel, or industrial transport unit;
- an equivalent entity or apparatus requiring verification, etc.

Conveniently, for example, the unique identifier to be verified may comprise:
- a government-issued identification number, including a passport number, national ID, social security number (SSN), or tax ID;
- a contact identifier, including a phone number, email address, or instant messaging handle;
- a financial identifier, including an International Bank Account Number (IBAN), credit or debit card number, SWIFT/BIC code, or cryptocurrency wallet address;
- a business or corporate identifier, including a VAT ID, DUNS number, Legal Entity Identifier (LEI), or trade registration number;
- a device identifier, including a device serial number, International Mobile Equipment Identity (IMEI), Media Access Control (MAC) address, or Universally Unique Identifier (UUID);
- a vehicle identifier, including a Vehicle Identification Number (VIN), license plate number, or maritime International Maritime Organization (IMO) number;
- an equivalent unique identifier associated with an entity or apparatus requiring verification.

Preferably, in a possible embodiment, the unique identifier is a unique contact identifier of an entity.

The present invention concerns a computer implemented method for interfacing with a blockchain network comprising:
- receiving a unique identifier,
- preparing a data structure to be recorded on the blockchain network,
- sending the data structure so prepared to the blockchain network for the recording into the blockchain network,
- preparing a message to be sent to a recipient address that is defined by, or associated with, the received unique identifier, wherein said message contains a verification mechanism for allowing the access to the blockchain network,
- sending the message so prepared to a recipient address that is defined by, or associated with, the received unique identifier.

For example, the verification mechanism comprises at least one of: a one-time password (OTP), a verification link, a verification code, or an equivalent authentication mechanism (biometric confirmation, digital signatures, etc.).

Preferably, the method further comprises:
- receiving a verification response generated from (and or connected with) the verification mechanism contained in the sent message,
- validating the verification response, preferably based on predefined verification criteria,
- determining, based on the validation, whether to send an access code (for example an access token, a session identifier, etc.).

Preferably, the access code is sent to a recipient address that is defined by, or associated with, the received unique identifier U1_ID.

Preferably, the method further comprises receiving an access request containing the sent access code and the unique identifier used as recipient address of the sent message.

Preferably, the message M is sent by using a wireless communication channel, for example via SMS, email, push notifications, internet-based messaging systems, cellular-based messaging system, satellite networks, or an equivalent wireless messaging system.

Preferably, the verification response is received and/or the access code is sent by using a wireless communication channel, for example an internet-based communication protocol, a cellular communication network, satellite networks, or other wireless communication system.

Preferably, the message M is sent by using a first wireless communication channel that is different from the wireless communication channel used for receiving the verification response and/or for sending the access code.

The present invention concerns a computer-implemented interface/platform between an entity and the blockchain network, said computer-implemented interface/platform is configured to be connected wirelessly with a device managed by said entity and with the blockchain network, said computer-implemented interface comprising a software application that is configured, when executed, to implement one or more of the above aspects of said computer implement method.

Advantageously, the method according to the invention allows to simplify the way of an entity interfaces with the blockchain network.

Advantageously, the method according to the invention allows to implement an interface for allowing an entity to interact with the blockchain network, both for recording data structures in the blockchain network and for accessing/reading the data structures recorded in the blockchain network.

In particular, the solution according to the invention allows to get the following advantages:
- saving memory,
- stores as little sensitive information as possible,
- is highly secure,
- it can configure a hot wallet for an entity without storing the cryptographic key to be used for signing the data structure,
- an entity can send and record a data structure (transaction) in the blockchain network just starting from the unique identifier and by sending it,
- there is no need for the user to remember and save the cryptographic key; actually, the user does not need to worry about the cryptographic key,
- there is no need of a previous relationship between the issuer/sender entity and the receiver entity of a digital item.

In particular, the method according to the invention may be carried out by an entity (i.e. the intermediary platform) acting as an intermediary between the sender and the receiver of a digital entity/asset, thus avoiding the need of a direct contact between the sender entity and the receiver entity and avoiding the need for the sender entity and/or the receiver entity to know each other.

The solution according to the invention enhances security, efficiency, and authentication in blockchain interactions by enabling deterministic cryptographic key generation without requiring persistent storage, thereby reducing the risk of key leaks and unauthorized access. It ensures that only verified entities can generate and use cryptographic credentials, mitigating fraud and identity spoofing. By leveraging asymmetric cryptography, the solution guarantees transaction integrity, non-repudiation, and tamper resistance while optimizing blockchain queries through public key-based addressing, reducing computational overhead. Additionally, it uses automated verification mechanisms, strengthening access control and preventing unauthorized blockchain interactions. These improvements enable a more secure, decentralized, and scalable blockchain authentication and transaction management system.

According to the invention, the computer-implemented method for interfacing with a blockchain network comprises receiving a unique identifier, preferably a verifiable unique identifier, more preferably a unique contact identifier of or associated with an entity. This feature is advantageous as it enables the reliable and secure identification of entities interacting with the blockchain network. By using a unique identifier, the method ensures that cryptographic operations, such as key generation and authentication, are performed based on a deterministic input. This reduces reliance on external authentication mechanisms and minimizes the risk of unauthorized access. Furthermore, by allowing the unique identifier to be verifiable, the method strengthens security by enabling proof of association between the identifier and the entity, ensuring that only legitimate users can generate or use cryptographic credentials. This is particularly important in decentralized environments where trust cannot be placed in a single authority, making cryptographic verification a fundamental requirement for secure interactions.

The method further includes determining a cryptographic key, preferably a private key, by calculation using the unique identifier and/or by starting from the unique identifier. This feature introduces an efficient and secure approach to key management, eliminating the need to store private keys while still ensuring that the correct key can be derived when needed. Traditional key storage solutions are prone to security risks, such as unauthorized access or key loss. By deriving the cryptographic key from a unique identifier, the method enhances security by reducing dependency on external storage and key recovery processes. This also improves user convenience, as cryptographic credentials can be regenerated without requiring backup keys, thereby maintaining security while ensuring accessibility. Moreover, using a deterministic function for key generation allows seamless integration into blockchain-based identity and authentication systems, enabling cryptographic operations to be performed without exposing sensitive information to third parties.

Preferably, the method further comprises verifying whether the received unique identifier is associated with a given entity. This step enhances authentication and prevents identity fraud by ensuring that the cryptographic key is only generated and used by the legitimate entity to which the identifier corresponds. Without this verification, malicious users could attempt to use identifiers that do not belong to them to generate unauthorized cryptographic keys. By confirming the association between the unique identifier and the entity before proceeding with key operations, the method strengthens security and ensures that cryptographic credentials remain under the control of authorized users. This is particularly beneficial in blockchain-based access control systems, where verifying the legitimacy of an entity before granting cryptographic privileges is essential for maintaining network integrity.

Preferably, the verification of whether the received unique identifier is associated with a given entity comprises retrieving data from at least one data source, determining, based on the retrieved data, whether the unique identifier is associated with the given entity, and generating a verification result. This approach improves the robustness of authentication by incorporating external verification mechanisms. By retrieving data from a trusted data source, the method ensures that the association between the identifier and the entity is established based on reliable records. This enhances the security of the blockchain network by preventing unauthorized entities from falsely claiming an identifier. The ability to generate a verification result further allows for automated decision-making, ensuring that access to cryptographic functions and blockchain interactions is granted only upon successful verification. This reduces manual intervention, minimizes errors, and improves the efficiency of authentication workflows, making it particularly useful in large-scale blockchain applications that require automated and secure identity verification.

Preferably, the cryptographic key determined in the method is a private key used in asymmetric cryptography, and the method further comprises deriving a public key from the private key and preparing a data structure to be sent to the blockchain network, wherein the data structure comprises a field that contains the public key so derived and/or an address derived from the public key. This feature ensures that blockchain transactions and interactions can be cryptographically authenticated using asymmetric cryptography. By deriving a public key from a private key, the method enables secure digital signatures and encryption mechanisms that allow for verifiable blockchain transactions without exposing private keys. The inclusion of the public key or an address derived from it in the data structure facilitates verification by other entities in the blockchain network, ensuring that interactions remain transparent and trustworthy. This is particularly advantageous in blockchain implementations where public-key cryptography is used for transaction validation, smart contract execution, or decentralized identity verification, providing a secure and efficient way to prove ownership and authorization without disclosing private credentials.

Preferably, the method further comprises digitally signing the prepared data structure using a further private key, wherein the further private key is preferably determined by calculation and by using or starting from a further unique identifier. This feature introduces an additional security layer by enabling multi-key authentication and hierarchical cryptographic structures. By requiring a further private key to sign the data structure, the method ensures that an additional level of verification is performed before the transaction or interaction is authorized. This enhances the security of blockchain-based operations by making it more difficult for unauthorized entities to forge or manipulate transactions. The ability to determine the further private key based on a further unique identifier also ensures that cryptographic credentials remain deterministically derivable, facilitating secure multi-factor authentication without requiring persistent key storage. This approach is particularly useful in environments where enhanced security is required, such as financial transactions, supply chain authentication, or decentralized governance systems.

Preferably, the method further comprises using the cryptographic key so determined, preferably the private key so determined, for digitally signing a data structure to be sent to the blockchain network. This ensures that all blockchain interactions are authenticated and verifiable, preventing unauthorized modifications or fraudulent transactions. Digital signatures play a critical role in blockchain security by allowing transactions and messages to be cryptographically verified without requiring a central authority. By using the cryptographic key to sign a data structure, the method guarantees that the data has not been altered and that it originates from an authorized source. This enhances trust in blockchain transactions, ensuring that only properly authenticated interactions are recorded in the blockchain. The ability to sign transactions using deterministically generated cryptographic keys further simplifies key management and improves security by eliminating the need to store long-term credentials while maintaining strong authentication guarantees.

Preferably, the cryptographic key determined in the method is a private key used in asymmetric cryptography, and the method further comprises deriving a public key from the private key and sending and/or using the public key so derived and/or an address derived from the public key for querying the blockchain network to retrieve at least one data structure that is recorded in the blockchain network and that contains, or is associated with, said public key or said address. This enables efficient and secure retrieval of blockchain data by leveraging cryptographic key-based addressing. By using a public key or an address derived from it to query the blockchain, the method eliminates the need for centralized lookup services and enhances privacy by allowing users to retrieve data without exposing sensitive credentials. This approach is particularly beneficial in blockchain applications where data integrity and decentralized access are critical, such as decentralized finance (DeFi), supply chain tracking, or digital identity management.

Preferably, the method further comprises preparing a message to be sent to a recipient address that is defined by, or associated with, the received unique identifier. This facilitates automated and secure communication between blockchain entities, enabling notifications, authentication requests, or transaction approvals to be efficiently transmitted. By defining recipient addresses based on unique identifiers, the method ensures that messages are reliably delivered without requiring manual intervention. This is particularly useful in smart contract-based systems, where secure and automated messaging between blockchain participants is essential for executing decentralized applications.

Preferably, the message contains a verification mechanism configured to verify the identity of an entity and/or to authorize an action. This enhances security by introducing an additional layer of authentication before granting access to blockchain functionalities. By incorporating verification mechanisms such as one-time passwords, cryptographic challenges, or biometric authentication, the method ensures that only legitimate entities can interact with the blockchain network. This reduces the risk of unauthorized access and enhances trust in blockchain-based identity verification systems.

Preferably, the method further comprises preparing a message containing a verification mechanism for allowing access to the blockchain network, sending the message to the recipient address, receiving a verification response, validating the verification response, determining whether to send an access code, and receiving an access request containing the access code along with the unique identifier. This sequence of operations establishes a robust authentication protocol that prevents unauthorized blockchain interactions. By requiring multiple validation steps before granting access, the method significantly enhances security, ensuring that only properly authenticated users can execute blockchain transactions or interact with decentralized applications.

The present invention concerns a computer-implemented method comprising sending wirelessly a unique identifier to an intermediary entity/platform interfacing with the blockchain network, wherein said unique identifier is used and/or was used to calculate a cryptographic key.

The present invention concerns a computer-implemented method comprising sending wirelessly a unique identifier to an intermediary entity/platform interfacing with the blockchain network, wherein - for each new data structure to be sent the blockchain network - send wirelessly a unique identifier to an intermediary entity/platform interfacing with the blockchain network, wherein said unique identifier is used and/or was used to calculate a cryptographic key.

Preferably, the method comprises receiving a first code (C1) generated as output of a first mathematical function having the sent unique identifier (U1_ID) as input, preferably also with a first predefined parameter (salt) S1. Preferably, the first code (C1) is a deterministic random number generated by starting from the unique identifier and, advantageously, is shared with (and as such is public for) the entity sending the unique identifier.

Preferably, in the method according to the invention, the cryptographic key (that is calculated by using the sent unique identifier and/or by starting from the sent unique identifier), the public key derived from the calculated cryptographic key - and eventually also the address that in turn is derived from the public key - are never shared and, in particular, are never received from the entity associated with the unique identifier. Therefore, advantageously, the public key and the address remain hidden for the entity interfacing with the blockchain network.

The present invention concerns a computer implemented method for interfacing with a blockchain network comprising:
- receiving a message comprising a verification mechanism,
- activating the verification mechanism in the message to generate a verification response,
- sending a verification response for validation,
- receiving an access code whether the verification response is validated,
- sending the received access code along with a unique identifier, wherein said unique identifier is intended and configured to be used for interfacing with the blockchain network.

Preferably, said message comprises a recipient address that is defined by, or associated with, the unique identifier.

Preferably, the unique identifier is the unique contact identifier of an entity.

Preferably, the method further comprising receiving at least one data of a data structure recorded on the blockchain network.

Preferably, the verification mechanism comprises for example at least one of a one-time password (OTP), verification link, verification code, cryptographic challenge-response mechanism, biometric authentication, or a smart contract-based authorization protocol.

One or more of said computer-implemented methods are intended to be loaded and/or executed on a device of - or managed by - an entity interfacing with the blockchain network.

Preferably, the data structure to be sent to the blockchain network is first hashed to obtain a fixed-length output that is then encrypted using the cryptographic key as determined.

Preferably, the method further comprises generating/deriving a public key from the cryptographic key so determined. Preferably, the method further comprises sending the public key so generated/derived.

Preferably, the method further comprises generating/deriving a public address from the public key so generated.

Preferably, said public address may be derived by formatting the public key and/or by adding to the public key an additional part, like checksums, for validating its integrity. More preferably, said public address may be derived by providing a user-friendly representation of the public key. More preferably, said public address may be derived as a hash of the public key.

Preferably, the method further comprises sending of the public address so generated/derived.

More preferably, the method further comprises sending to the blockchain network the signed data structure with the public key so determined.

Preferably, in a possible embodiment, the cryptographic key as determined is stored in a data storage and retrieval system by associating it with the unique identifier used for its calculation. For example, the cryptographic key as determined is stored in a look-up table, or equivalent data storage and retrieval system, by associating it with the unique identifier used for its calculation. More preferably, the cryptographic key is determined at a registration step. Therefore, after a first determining of the cryptographic key, for each of the following access or request of data structure to be signed, the unique identifier may be used as the input parameter for retrieving the stored cryptographic key from the data storage and retrieval system.

Preferably, in a possible embodiment, the cryptographic key is determined by calculation with the use of said unique identifier for each access or request of data structure to be signed. Therefore, the cryptographic key is not stored and is never saved.

Preferably, the calculation of the cryptographic key is implemented by using at least one mathematical function having the unique identifier as input.

Preferably, the calculation of the cryptographic key is implemented by using at least one mathematical function having as input the unique identifier and also at least one parameter. More preferably, said at least one parameter adds additional randomness and context. Ideally, said at least one parameter (salt) is predefined and constant.

Preferably, said at least one mathematical function generates a deterministic output of a predefined length (for example 256 bits).

Preferably, said at least one mathematical function uses an algorithm based on a secure hashing or message authentication process. For example, said at least one mathematical function uses the HMAC - based key derivation function (also known as "HKDF") algorithm.

Preferably, in a possible embodiment, the calculation of the cryptographic key is implemented by the following steps:
- using a first mathematical function (for example hkdf256) having as input the unique identifier (U1_ID), and preferably also a first predefined parameter (S1), and generating as output a first code (C1),
- using a second mathematical function (for example hkdf256) having as input said generated first code (C1), preferably also a second predefined parameter (S2), and generating as output the cryptographic key (U1_CK).

Preferably, in a further possible embodiment, the calculation of the cryptographic key is implemented by the following steps:
- using a first mathematical function (for example hkdf256) having as input the unique identifier (U1_ID), and preferably also a first predefined parameter (S1), and generating as output a first code (C1),
- using a further mathematical function (for example hmac256) having as input said generated first code (C1), and preferably also a second predefined parameter (S2), and generating as output a further code (C2).
- using a second mathematical function (for example hkdf256) having as input said generated first code (C1), and preferably also said generated further code (C2), and generating as output the cryptographic key (U1_CK).

Advantageously, the use of the further mathematical function adds a layer for increasing the entropy of the second predefined parameter as it is used for generating the cryptographic key.

More preferably, said at least first and second parameters add additional randomness and context. Ideally, said at least first and second parameters are predefined and constant.

Preferably, the first mathematical function generates a deterministic output of a predefined length. Preferably, the second mathematical function generates a deterministic output of a predefined length. Preferably, the further mathematical function generates a deterministic output of a predefined length.

Preferably, the first mathematical function and second mathematical function use the same algorithm.

Preferably, the first mathematical function and/or second mathematical function use algorithm based on a secure hashing or message authentication process. For example, said first mathematical function and second mathematical function use the HMAC - based key derivation function (also known as "HKDF") algorithm.

Advantageously, in the embodiment wherein the cryptographic key derived from the unique identifier is calculated every time and never stored/saved, in the intermediary entity implementing the method need to be securely stored only the first predefined parameter and the second predefined parameter, and preferably may be stored also the credentials for an administrator's cryptographic key to manage other cryptographic keys.

Preferably, in a possible embodiment, the cryptographic key is a private key of a key pair comprising also a public key. In particular, the cryptographic key may be a private key used in asymmetric cryptography and in pair with a public key.

Preferably, in a possible embodiment, the cryptographic key is a secret key. In particular, the cryptographic key may be a key used is symmetric cryptography, thus serving both for encryption and decryption.

In particular, the private key is a cryptographic key used in an asymmetric cryptographic system.

In particular, the public key is a key derived from the private key using an asymmetric cryptographic algorithm.

Preferably, the private key is determined by calculation and by using unique identifier and/or by starting from said unique identifier, wherein the private key is generated by using at least one deterministic function applied to the unique identifier.

Preferably, in a possible embodiment, the sender/issuer entity F1 knows the unique identifier U1_ID of an entity U1 (acting as the recipient entity) because the sender/issuer entity F1 manages or has the access to a database wherein each unique identifier U1_ID is associated to a corresponding entity U1.

Preferably, in a possible embodiment, the sender/issuer entity F1 knows the unique identifier U1_ID of an entity U1 because F1 is the entity that issues the unique identifier U1_ID for each entity U1. For example, the sender/issuer entity F1 may be a mobile phone provider, the unique identifier U1_ID may be a mobile phone number and the entity U1 may be a user associated with a mobile phone number; therefore, the mobile phone provider F1 issues and knows the mobile phone acting as unique identifier U1_ID for each user.

Advantageously, the entity U1 acting as the recipient entity can access, without any previous registration or onboarding process, to the content of the data structured recorded in the blockchain network and associated with said entity. This allows a sender/issuer entity F1 to send a data structure/transaction in the blockchain network even if the recipient entity U1 is not registered in the intermediary platform.

Preferably, in a possible embodiment, during the registration or onboarding process of the sender/issuer entity F1 onto the intermediary platform, a cryptographic key for F1 is determined. Optionally, the cryptographic key so determined for F1 is saved in/by the intermediary platform. More preferably, the cryptographic key for F1 may be determined by calculation and by starting from a unique identifier of F1 sent from the sender/issuer entity F1 to the intermediate platform. In a possible embodiment, the cryptographic key for F1 may be generated in a traditional way by a random number generation process without calculating it by starting from a unique identifier of F1.

Conveniently, the data structure may comprise any format of a set of elements representing an operation, action, or event to be processed, validated, and recorded on a blockchain or distributed ledger.

Conveniently, the data structure may comprise a unique identifier for the data structure, payload data containing the data or the reference to the data to be recorded, and validation data for ensuring the integrity and authenticity of the data structure.

Conveniently, the data structure may comprise a field for destination identifier that specify the entity to which the digital entity/asset is directed.

Preferably, the data structure may be a transaction.

Conveniently, the digital item to be recorded on the blockchain network may comprise any digital constructs created, managed, or transacted on a blockchain network, including cryptocurrencies, tokens, smart contracts, and other digital representations that are suitable to be recorded on a blockchain.

Preferably, the unique identifier is a unique contact identifier. Preferably, the unique identifier is an identifier that univocally identify the contact of an entity. More preferably, the unique identifier is a unique contact identifier that is suitable/capable to be verified, in particular to verify the association between a unique identifier and a given entity, more in detail to confirm or not that a given unique identifier is associated to a given entity.

Ideally, the unique identifier is a unique contact identifier that is verified by sending a message to a recipient address that is defined by - or associated with - the unique contact identifier, such as an email address or phone number.

Preferably, the unique identifier is a verifiable unique identifier. Preferably, the unique identifier may be verified electronically and/or by a third party so as to check or guarantee that a unique identifier belongs to, or is connected to, a physical person or a legal entity. For example, the unique identifier may be a user's phone number, a user's email address, a user's tax identification number, a user's passport number, a vehicle plate number, a device/product serial number, etc.

The present invention further concerns a data processing apparatus/device/system comprising means for carrying out one or more of the methods as above mentioned.

A computer program comprising instructions which, when the program is executed by a computer, cause the computer to carry out one or more of the methods as above mentioned.

A computer-readable medium comprising instructions which, when the program is executed by a computer, cause the computer to carry out one or more of the methods as above mentioned.

### DESCRIPTION OF THE FIGURES

The present invention is hereinafter further clarified in some of its preferred embodiments shown for purely exemplifying and non-limiting purposes with reference to the attached drawings in which:
- Figure 1: schematically shows a flow diagram of a method according to the invention for recording a digital item into the blockchain network,
- Figure 2: schematically shows the flow diagram of fig. 1 with the adding of a verification procedure,
- Figure 3: schematically shows the flow diagram of a method according to the invention for accessing data recorded in the blockchain network,
- Figure 4: shows a flow diagram of a first implementation for determining a cryptographic key starting form a unique identifier,
- Figure 5: shows a flow diagram of a second implementation for determining a cryptographic key starting form a unique identifier.

### DETAILED DESCRIPTION OF THE INVENTION AND OF SOME PREFERRED EMBODIMENTS

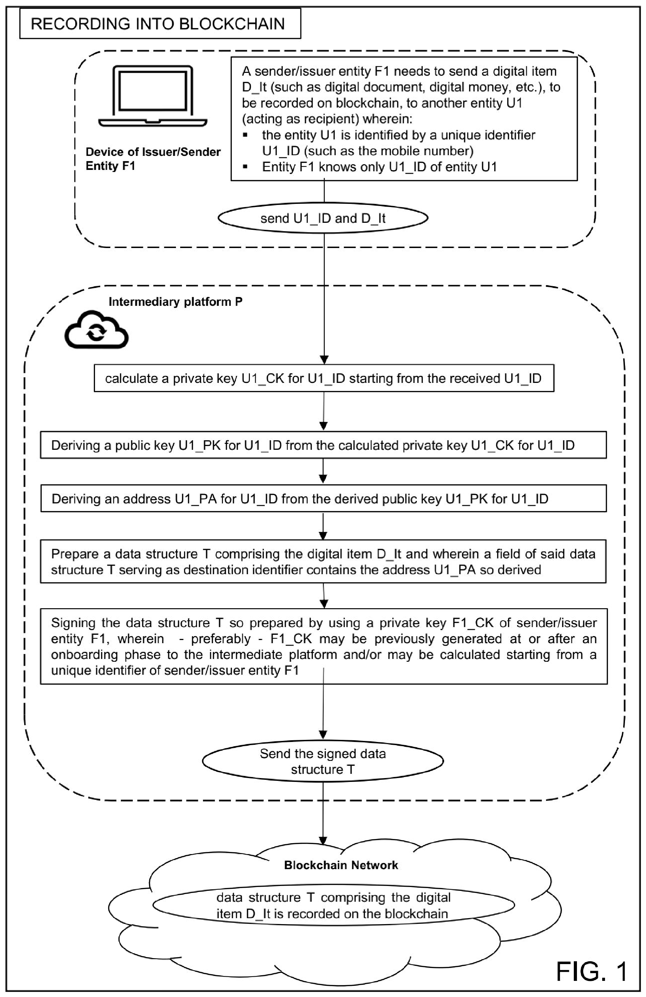

As shown in Figure 1, in a possible embodiment of the invention, there is a sender/issuer entity F1 that needs to send a digital item D_It, such as a digital document or digital money, to be recorded on blockchain, to another entity U1 acting as recipient.

The entity U1 is identified by a unique identifier U1_ID, such as a mobile number. The sender/issuer entity F1 knows only U1_ID of entity U1 and, in particular, does not know a blockchain address of entity U1.

To facilitate secure transmission and blockchain recording, the sender/issuer entity F1 sends to an intermediary platform P the unique identifier U1_ID along with the digital item D_It.

The intermediary platform P calculates a private key U1_CK for U1_ID starting from the received unique identifier U1_ID.

The private key U1_CK may be computed using a deterministic cryptographic function that ensures uniqueness and recoverability when provided with the same input.

From the calculated private key U1_CK, the intermediary platform P derives a public key U1_PK for the unique identifier U1_ID using asymmetric cryptographic techniques, ensuring that the calculated private key U1_PK can be used for verification purposes without exposing U1_CK.

From the derived public key U1_PK, the intermediary platform P may derive an address U1_PA for unique identifier U1_ID through a standardized address derivation algorithm, such as a hashing function or encoding scheme specific to the blockchain network.

The intermediary platform P then prepares a data structure T comprising the digital item D_It, wherein a field of said data structure T serving as destination identifier contains the derived address U1_PA.

The sender/issuer entity F1 signs the prepared data structure T using a private key F1_CK, wherein preferably F1_CK may be previously generated at or after an onboarding phase to the intermediary platform P and/or may be calculated starting from a unique identifier of sender/issuer entity F1.

The signed data structure T is then sent to the blockchain network via the intermediary platform P, ensuring that the data structure T comprising the digital item D_It is immutably recorded on the blockchain.

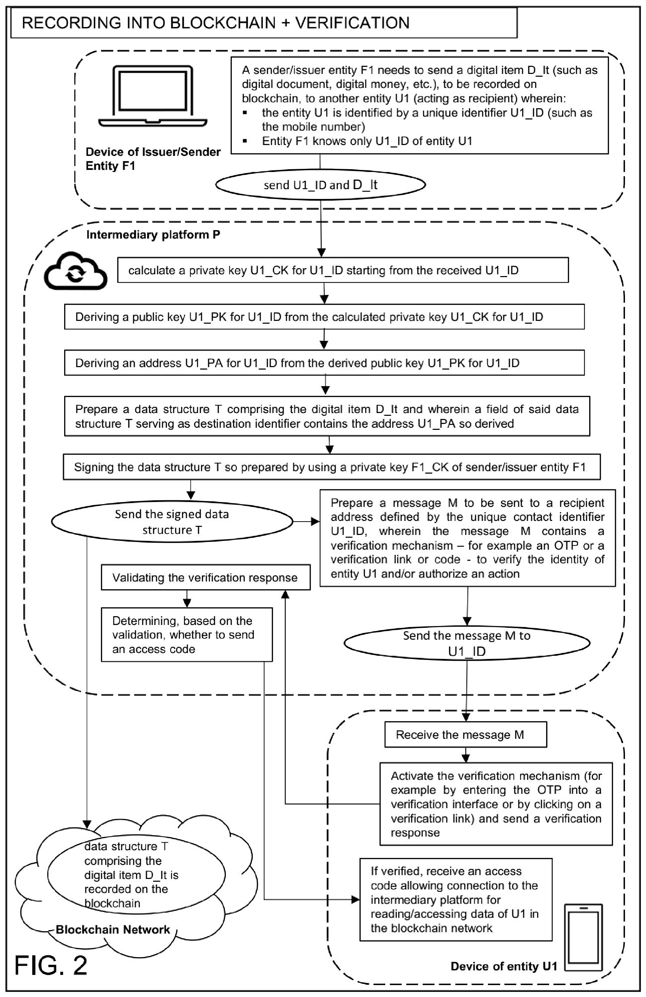

As shown in Figure 2, an additional verification step may be introduced to verify the recipient entity U1 before allowing access to the recorded blockchain data.

In particular, in addition to the steps above disclosed with reference to Figure 1, the intermediary platform P prepares a message M to be sent to a recipient identified by the unique contact identifier U1_ID, wherein preferably the message M contains a mechanism - such as a one-time password (OTP) or a verification link or code - to verify the identity of entity U1 and/or authorize an action.

The intermediary platform P sends the message M (for example via SMS, email, push notification or other transmission channel) to an entity U1 identified by said unique contact identifier U1_ID.

The device of entity U1 receives the message M and the entity U1 activates the mechanism to verify the identity of entity U1 and/or authorize an action, for example such activation may be done by entering the one-time password (OTP) into a verification interface or by clicking on a verification link contained in the message M.

The intermediary platform P validates and/or completes the verification and/or authorization process. For example, the intermediary platform P checks the received one-time password (OTP), verification link activation, or other provided credentials against stored authentication records.

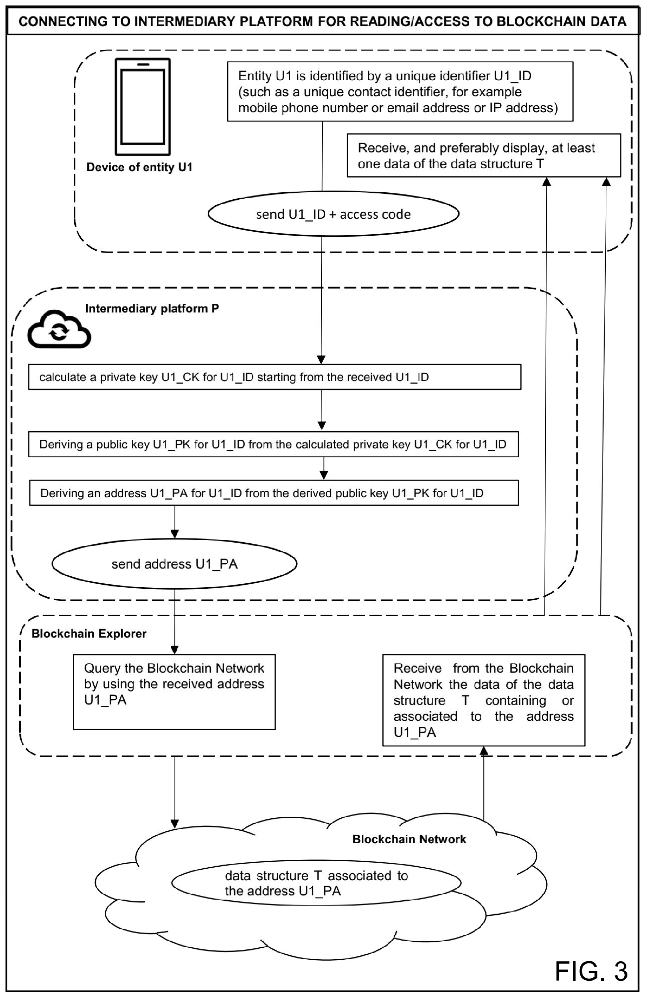

If the validation is successful, the intermediary platform P generates and sends an access token to entity U1, allowing it to securely connect to the intermediate platform P for reading/accessing data of U1 in the blockchain network (as better disclosed for example in Fig. 3). If verified/authorized, an access token is provided allowing connection to the intermediary platform P for reading/accessing data of entity U1 in the blockchain network.

Figure 3 illustrates how an entity U1, identified by a unique identifier U1_ID - such as a unique contact identifier, for example, a mobile phone number, email address, or IP address - may interact with the blockchain network via the intermediary platform. Figure 3 pertains to the entity U1 acting as the recipient in Figures 1 and 2. However, it is understood that the same interaction may also apply to the issuer/sender entity F1 or, in general, to any other entity wishing to access and display the data recorded in the blockchain network and associated with such entity.

In particular, to connect to the intermediary platform P for reading/accessing blockchain data, entity U1 sends its a unique identifier U1_ID to the intermediary platform P. The intermediary platform P calculates a private key U1_CK for the unique identifier U1_ID starting from the received unique identifier U1_ID. From the calculated private key U1_CK, the intermediary platform P derives a public key U1_PK for the unique identifier U1_ID and further derives an address U1_PA for the unique identifier U1_ID.

The intermediary platform P sends the address U1_PA to a blockchain explorer, which may be either part of the intermediary platform P or a separate entity.

The blockchain explorer queries the blockchain network by using the received address U1_PA. The blockchain network returns to the blockchain explorer the data structure T associated with the address U1_PA. The data so received by the blockchain explorer are sent - preferably via the intermediate platform - to the device of entity U1. The data so received by the device of entity U1 may be read or displayed by the entity U1.

This process ensures that entity U1 has access to its blockchain-associated records in a secure and seamless manner, leveraging cryptographic derivation techniques without requiring explicit prior onboarding or registration.

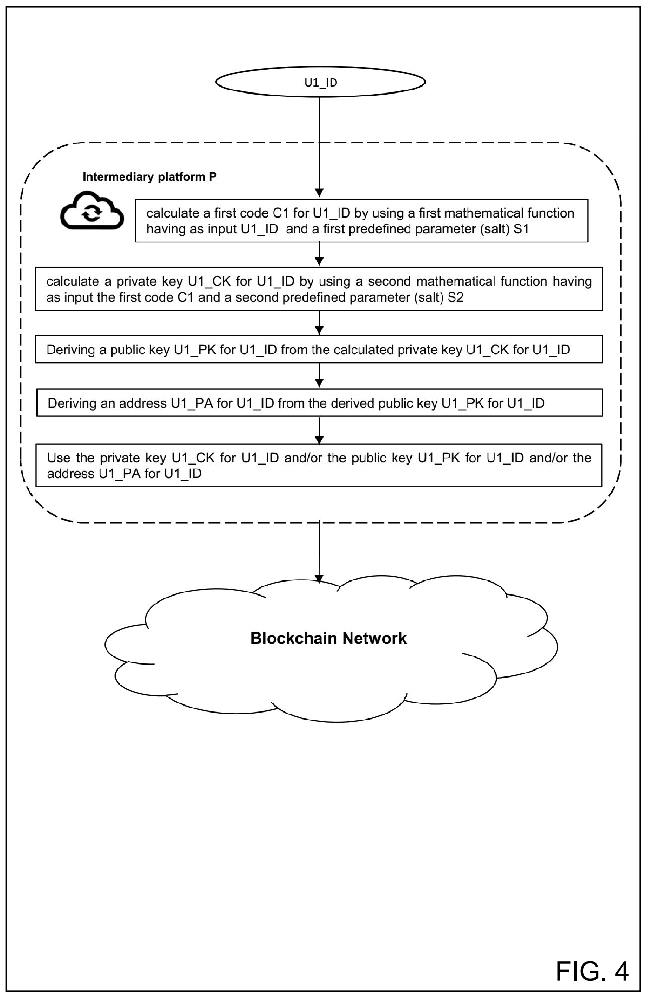

To enhance security, a structured cryptographic approach may be employed for determining the private key (see Figure 4). In particular, the intermediary platform P calculates a first code C1 for the unique identifier U1_ID by using a first mathematical function having as input the unique identifier U1_ID and a first predefined parameter (salt) S1. The intermediary platform P calculates a private key U1_CK for the unique identifier U1_ID by using a second mathematical function having as input the first code C1 and a second predefined parameter (salt) S2. These multi-step cryptographic transformations add an additional layer of security, ensuring resistance against brute-force attacks and unauthorized access attempts. Then, from the calculated private key U1_CK, the intermediary platform P derives a public key U1_PK for the unique identifier U1_ID and further derives an address U1_PA for the unique identifier U1_ID. The intermediary platform P prepares a data structure T wherein a field of said data structure T contains the derived address U1_PA; in particular, said field of data structure T serves as a destination identifier specifying the entity to which a digital item is directed. The sender/issuer entity F1 signs the prepared data structure T using a private key F1_CK, wherein preferably F1_CK may be previously generated at or after an onboarding phase and/or may be calculated starting from a unique identifier of sender/issuer entity F1. The signed data structure T is then sent to the blockchain network via the intermediary platform P, ensuring the recording of the data structure T comprising the digital item D_It on the blockchain.

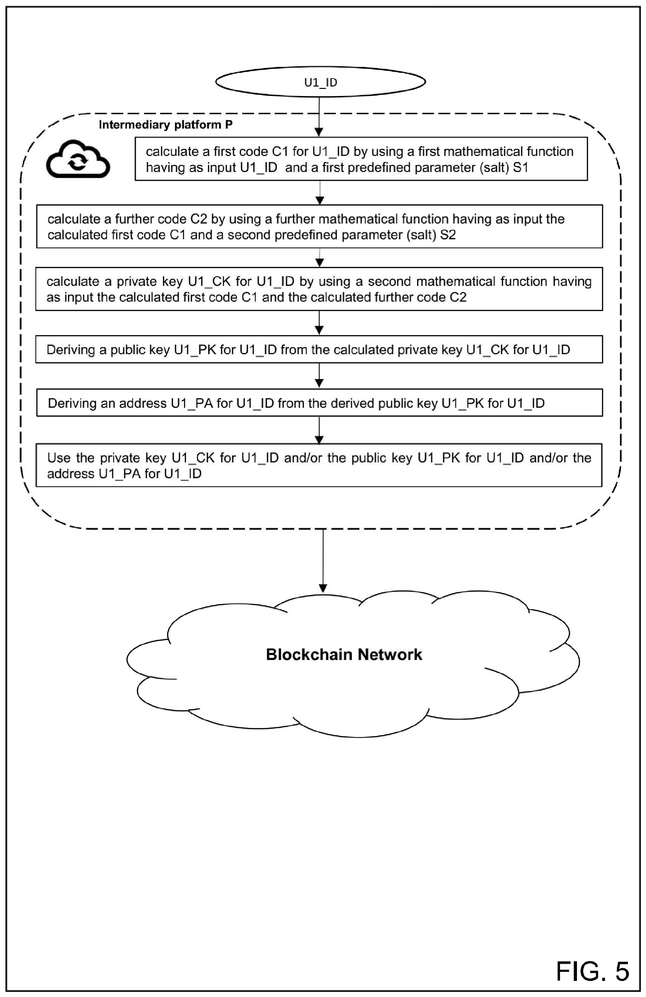

An alternative possible cryptographic derivation approach is shown in Fig. 5. The intermediary platform P calculates a first code C1 for the unique identifier U1_ID by using a first mathematical function having as input the unique identifier U1_ID and a first predefined parameter (salt) S1. The intermediary platform P calculates a further code C2 by using a further mathematical function having as input the calculated first code C1 and a second predefined parameter (salt) S2. The intermediary platform P then calculates a private key U1_CK for the unique identifier U1_ID by using a second mathematical function having as input the calculated first code C1 and the calculated further code C2. This extended computation introduces additional cryptographic complexity, further reducing predictability and increasing key entropy. From the calculated private key U1_CK, the intermediary platform P derives a public key U1_PK for the unique identifier U1_ID and further derives an address U1_PA for the unique identifier U1_ID. The intermediary platform P prepares a data structure T wherein a field of said data structure T contains the derived address U1_PA. The sender/issuer entity F1 signs the prepared data structure T using a private key F1_CK. The signed data structure T is then sent to the blockchain network via the intermediary platform P, ensuring the recording of the data structure T comprising the digital item D_It on the blockchain.

Conveniently, the data structure T is signed using a further private key associated with the sender/issuer entity F1, wherein said further private key being distinct from the cryptographic key determined from the unique identifier U1_ID.

In a possible implementation, the sender/issuer entity F1 is a government authority and the entity U1 is a tax resident identified by a unique identifier U1_ID, such as a tax identification number. The sender/issuer entity F1 provides the unique identifier U1_ID and a digital item D_It representing a digital tax credit certificate to an intermediary platform P. The intermediary platform P determines a cryptographic key, preferably a private key, by calculation using the unique identifier U1_ID, derives a public key and/or an address, and prepares a data structure T comprising the digital item D_It and said public key and/or address. The data structure T is then signed using a further private key associated with the sender/issuer entity F1 and sent to the blockchain network. Advantageously, the entity U1 is not required to have a blockchain account or wallet, since the cryptographic key is determined from the unique identifier. Preferably, a message M comprising a verification mechanism, such as a one-time password (OTP), is sent to a recipient address associated with the unique identifier U1_ID, enabling the entity U1 to access the digital item D_It recorded on the blockchain network.

In a further possible implementation, the sender/issuer entity F1 is a bank or payment institution and the entity U1 is an account holder identified by a unique identifier U1_ID, such as an International Bank Account Number (IBAN). The sender/issuer entity F1 provides the unique identifier U1_ID and a digital item D_It representing a Central Bank Digital Currency (CBDC) payment to an intermediary platform P. The intermediary platform P determines a cryptographic key, preferably a private key, by calculation using the unique identifier U1_ID, derives a public key and/or an address, and prepares a data structure T comprising the digital item D_It and said public key and/or address. The data structure T is then signed using a further private key associated with the sender/issuer entity F1, and sent to the blockchain network. Advantageously, the entity U1 is not required to have a blockchain account or wallet, since the cryptographic key is determined from the unique identifier U1_ID and may be generated on demand without being persistently stored. Preferably, a message M comprising a verification mechanism is sent to a recipient address associated with the unique identifier U1_ID, enabling the entity U1 to access the digital item D_It recorded on the blockchain network. Preferably, the verification mechanism is configured to authenticate the entity U1 based on credentials associated with the unique identifier U1_ID, thereby confirming the association between the entity U1 and said unique identifier U1_ID. Advantageously, the use of the unique identifier U1_ID enables authentication of the entity U1 through existing authentication mechanisms associated with said unique identifier, thereby avoiding the need for dedicated blockchain credentials, while the determination of the cryptographic key by calculation from the unique identifier U1_ID and its generation on demand without persistent storage reduces memory usage, minimizes the risk of key loss or unauthorized access, and simplifies user interaction by reducing the computational and operational complexity associated with key management.

In a further possible implementation, the sender/issuer entity F1 is a copyright collecting society and the entity U1 is an author identified by a unique identifier U1_ID, such as a tax identification number. The sender/issuer entity F1 provides the unique identifier U1_ID and a digital item D_It representing a copyright registration token to an intermediary platform P. The intermediary platform P determines a cryptographic key, preferably a private key, by calculation using the unique identifier U1_ID, derives a public key and/or an address, and prepares a data structure T comprising the digital item D_It and said public key and/or address. The data structure T is then signed using a further private key associated with the sender/issuer entity F1 and sent to the blockchain network. Advantageously, the author representing the entity U1 is not required to have a blockchain account or wallet, since the cryptographic key is determined from the unique identifier U1_ID and may be generated on demand without being persistently stored. Advantageously, the public key and/or the address derived from the unique identifier U1_ID is usable by third parties for querying the blockchain network and verifying the association between the entity U1 and the digital item D_It recorded on the blockchain network. Advantageously, the method enables validation of ownership of the digital item D_It by third parties without requiring the entity U1 to create, store, or operate cryptographic credentials, while the determination of the cryptographic key by calculation from the unique identifier U1_ID and its generation on demand without persistent storage reduces memory usage, minimizes the risk of key loss or unauthorized access, and simplifies the verification process.

In a further possible implementation, the sender/issuer entity F1 is a public authority, such as a municipality, and the entity U1 is a voter identified by a unique identifier U1_ID, such as a tax identification number. The sender/issuer entity F1 provides the unique identifier U1_ID and a digital item D_It representing a voting credential to an intermediary platform P. The intermediary platform P determines a cryptographic key, preferably a private key, by calculation using the unique identifier U1_ID, derives a public key and/or an address, and prepares a data structure T comprising the digital item D_It and said public key and/or address. The data structure T is then signed using a further private key associated with the sender/issuer entity F1 and sent to the blockchain network. Preferably, the intermediary platform P verifies that the unique identifier U1_ID is associated with an eligible voter by retrieving data from at least one data source and determining whether the entity U1 is authorized to participate. Preferably, a message M comprising a verification mechanism, such as a one-time password, is sent to a recipient address associated with the unique identifier U1_ID, enabling the entity U1 to access and use the digital item D_It. Preferably, the digital item D_It comprises a time-limited credential configured for a single use. Preferably, a further data structure associated with the use of the digital item D_It is recorded on the blockchain network as proof of participation. Advantageously, the entity U1 is not required to have a blockchain account or wallet, since the cryptographic key is determined from the unique identifier U1_ID and may be generated on demand without being persistently stored. Advantageously, the method enables granting and controlled use of digital credentials based on verification of the unique identifier U1_ID, while ensuring secure access through the verification mechanism and recording of participation on the blockchain network, thereby improving traceability and reducing the computational and operational complexity associated with credential management.

In a further possible implementation, the method comprises associating at least one public key, derived from a private key determined by calculation using a verifiable unique identifier, with a master public key derived from a master private key. Advantageously, this defines a hierarchical key structure with a single level of association between the master public key and said at least one public key. More preferably, this defines a hierarchical key structure of master-slave type.

Preferably, the master private key is not determined by calculation using a verifiable unique identifier.

Preferably, operations associated with said at least one public key are executable only upon authorization by the master private key. Advantageously, the control over the use of cryptographic keys derived from verifiable unique identifiers is exclusively assigned to the holder of the master private key.

Advantageously, this hierarchical key structure improves security by restricting the execution of operations to those authorized by the master private key, thereby reducing the risk of unauthorized access and mitigating the exposure of cryptographic keys derived from verifiable unique identifiers.

Preferably, the blockchain network is implemented according to a distributed ledger protocol having or supporting key delegation mechanisms, whereby a private key associated with a blockchain account or smart contract may be modified while maintaining the same public address associated with said account or smart contract, and wherein said public address being derived from or associated with a master public key. In a possible embodiment, the blockchain network may be implemented, for example, according to one or more of the following distributed ledger protocols: Algorand, Ethereum (e.g. ERC-4337), NEAR, Polkadot/Substrate, or Cosmos SDK-based protocols, or other protocols supporting key delegation mechanisms enabling modification of cryptographic keys without changing the associated public address.

Devices managed by the entities F1 and/or U1 may comprise computing devices such as desktop computers, laptops, smartphones, tablets, or other portable or non-portable electronic devices, each comprising at least one processor. The intermediary platform P comprises at least one processor and may be implemented as a server, cloud system, or distributed computing system. The devices of the entities F1 and/or U1 communicate with the intermediary platform P, and the intermediary platform P communicates with the blockchain network via one or more communication networks, preferably wireless networks such as the Internet and/or cellular networks, or alternatively via wired connections. The method may be implemented by means of software, hardware, firmware, or combinations thereof, including one or more computer programs executable on programmable systems. Said programs may be stored on or transmitted via a computer-readable medium. The system may be implemented according to a client-server architecture, wherein the devices of the entities F1 and/or U1 act as clients and the intermediary platform P acts as a server, communicating through one or more communication networks.

## Claims

1. A computer-implemented method for interfacing with a blockchain network comprising:
- receiving a unique identifier,
- determining a cryptographic key, preferably a private key, by calculation and by using said unique identifier and/or by starting from said unique identifier,
- using the cryptographic key, preferably the private key, so determined.

2. Method according to claim 1, wherein said unique identifier is verifiable and is a unique contact identifier of an entity or a unique contact identifier associated with an entity.

3. Method according to one or more of the previous claims, further comprising verifying whether the received unique identifier is associated with a given entity.

4. Method according to claim 3, wherein verifying whether the received unique identifier is associated with a given entity comprises:
- retrieving data from at least one data source,
- determining, based on the retrieved data, whether the unique identifier is associated with the given entity,
- generating a verification result indicating whether the unique identifier is associated with the given entity.

5. Method according to one or more of the previous claims, wherein said cryptographic key is a private key used in asymmetric cryptography and the method further comprises:
- deriving a public key from said private key so determined,
- preparing a data structure to be sent to the blockchain network, wherein said data structure comprises a field that contains the public key so derived and/or an address derived from said public key.

6. Method according to one or more of the previous claims, further comprising digitally signing the data structure so prepared using a further private key, preferably said further private key being determined by calculation and by using or starting from a further unique identifier.

7. Method according to one or more of the previous claims, further comprising using the cryptographic key so determined, preferably the private key so determined, for digitally signing a data structure to be sent to the blockchain network.

8. Method according to one or more of the previous claims, wherein said cryptographic key is a private key used in asymmetric cryptography and the method further comprises:
- deriving a public key from said private key so determined,
- sending and/or using the public key so derived and/or an address, derived from said public key, for querying the blockchain network to retrieve at least one data structure which is recorded in said blockchain network and which contains, or is associated with, said public key or said address.

9. Method according to one or more of the previous claims, further comprising preparing a message to be sent to a recipient address that is defined by, or associated with, the received unique identifier.

10. Method according to the previous claim, wherein the message contains a verification mechanism configured to verify the identity of the entity and/or to authorize an action.

11. Method according to one or more of the previous claims, further comprising:
- preparing a message to be sent to a recipient address that is defined by, or associated with, the received unique identifier, and wherein said message contains a verification mechanism for allowing the access to the blockchain network,
- sending the message so prepared to the recipient address that is defined by, or associated with, the received unique identifier,
- receiving a verification response generated from said verification mechanism,
- validating the verification response, preferably based on predefined verification criteria,
- determining, based on the validation, whether to send an access code,
- receiving an access request containing the sent access code along with the unique identifier used as recipient address of the sent message.

12. Method according to one or more of the previous claims, wherein the message is sent by using a first wireless communication channel that is different from the wireless communication channel used for receiving the verification response and/or for sending the access code.

13. Method according to one or more of the previous claims, further comprising:
- receiving a digital item (D_It), or its reference, to be recorded on a blockchain network,
- determining a private key for said unique identifier (U1_ID) by calculation and by using said unique identifier (U1_ID) and/or by starting from said unique identifier (U1_ID),
- deriving a public key (U1_PK) for said unique identifier (U1_ID) from said private key (U1_CK) for said unique identifier (U1_ID),
- preparing a data structure (T) comprising the digital item (D_It) and a field that contains the public key (U1_PK) for said unique identifier (U1_ID) so derived and/or an address (U1_PA) derived from said public key (U1_PK) for said unique identifier (U1_ID).

14. Method according to one or more of the previous claims, wherein the calculation of the cryptographic key is implemented by the following steps:
- using a first mathematical function having as input the unique identifier (U1_ID) and also a first predefined parameter (S1), and generating as output a first code (C1),
- using a second mathematical function having as input said generated first code (C1) and also a second predefined parameter (S2), and generating as output the cryptographic key (U1_CK),
or
- using a first mathematical function having as input the unique identifier (U1_ID), and also a first predefined parameter (S1), and generating as output a first code (C1),
- using a further mathematical function having as input said generated first code (C1), and also a second predefined parameter (S2), and generating as output a further code (C2).
- using a second mathematical function having as input said generated first code (C1), and also said generated further code (C2), and generating as output the cryptographic key (U1_CK).

15. Method according to one or more of the previous claims, further comprising associating at least one public key, derived from a private key determined by calculation using a verifiable unique identifier, with a master public key derived from a master private key.
